# EUROPÄISCHE PATENTSCHRIFT

(11) **EP 3 819 175 B1**
(45) Veröffentlichungstag und Bekanntmachung des Hinweises auf die Patenterteilung: **04.05.2022**
(21) Anmeldenummer: 20205137.1
(22) Anmeldetag: 02.11.2020
(51) Int. Cl.: B60T 10/02, F16D 57/04

(54) **PNEUMATISCHE STEUERUNGSVORRICHTUNG EINES HYDRODYNAMISCHEN RETARDERS**
PNEUMATIC CONTROL DEVICE FOR A HYDRODYNAMIC RETARDER
DISPOSITIF DE COMMANDE PNEUMATIQUE D'UN RALENTISSEUR HYDRODYNAMIQUE

(30) Priorität: 07.11.2019 DE 102019129989
(43) Veröffentlichungstag der Anmeldung: 12.05.2021
(73) Patentinhaber: ZF CV Systems Europe BV, 1170 Brussels (BE)
(72) Erfinder: KNOKE, Stefan, 30657 Hannover (DE)
(74) Vertreter: Rabe, Dirk-Heinrich

(56) Entgegenhaltungen:
- EP-A2- 1 970 789
- EP-A2- 2 006 564
- DE-A1-102013 207 004

## Beschreibung

Die Erfindung betrifft eine pneumatische Steuerungsvorrichtung für einen hydrodynamischen Retarder, mit einem Arbeitsdruckanschluss, der mit einem Vorratsbehälter des Retarders in Verbindung steht, mit mindestens einem Einlassventil, über welches eine zu dem Arbeitsdruckanschluss führende Arbeitsdruckleitung mit einer an eine Druckluftquelle angeschlossenen Belüftungsleitung verbindbar ist, und mit mindestens einem Auslassventil, über welches die Arbeitsdruckleitung mit einer an einen Entlüftungsausgang angeschlossenen Entlüftungsleitung verbindbar ist.

Omnibusse mit einem zulässigen Gesamtgewicht von mehr als 5,5 t und Lastkraftwagen mit einem zulässigen Gesamtgewicht von mehr als 9 t müssen gemäß einer gesetzlichen Bestimmung außer mit einer Betriebsbremsanlage auch mit einer Dauerbremse ausgerüstet sein. Mit einer Dauerbremse kann ein Fahrzeug, zum Beispiel bei einer Bergabfahrt, über einen längeren Zeitraum weitgehend verschleißfrei abgebremst werden, welches mit den Radbremsen einer Betriebsbremsanlage nicht möglich ist, da diese bei längerer Bremsbetätigung überhitzen und infolgedessen komplett ausfallen würden. Eine Dauerbremse kann als eine Motorbremse oder als ein hydrodynamischer oder elektromagnetischer Retarder ausgeführt sein.

Bei einem hydrodynamischen Retarder handelt es sich um eine Strömungsbremse, die üblicherweise in der Funktion eines sogenannten Sekundärretarders auf eine Kardanwelle des Antriebsstrangs wirksam und entweder an einem Schaltgetriebe über der dortigen Ausgangswelle oder an einem Achsgetriebe über der dortigen Eingangswelle angeordnet ist. In einem torusförmigen Gehäuse des Retarders sind ein drehbar gelagertes, an der Ausgangswelle des Schaltgetriebes, der Kardanwelle oder der Eingangswelle des Achsgetriebes befestigtes Rotor-Schaufelrad und ein feststehendes, an dem Gehäuse des Retarders befestigtes Stator-Schaufelrad angeordnet. Bei fahrendem Fahrzeug und zumindest teilweise mit einem Arbeitsfluid, wie Hydrauliköl, gefüllten Gehäuse wird das Arbeitsfluid durch das drehende Rotor-Schaufelrad nach außen befördert und strömt in das Stator-Schaufelrad. In dem Stator-Schaufelrad wird das Arbeitsfluid umgelenkt und nach innen befördert. Hierbei wird Bewegungsenergie in Wärmeenergie umgewandelt, wodurch das Fahrzeug im Ergebnis abgebremst wird.

Der hydrodynamische Retarder wird meistens mittels einer pneumatischen Steuerungseinrichtung eingeschaltet, und die Höhe des erzeugten Bremsmomentes wird abhängig von der Bremsanforderung eines Fahrers über eine Beaufschlagung eines weitgehend mit dem Arbeitsfluid des Retarders gefüllten Vorratsbehälters mit Druckluft gesteuert oder geregelt. Wird der über den Arbeitsdruckanschluss in den Vorratsbehälter eingeleitete Luftdruck erhöht, so wird mehr Arbeitsfluid in das Gehäuse des Retarders gedrückt und dadurch das in dem Retarder erzeugte Bremsmoment erhöht. Wenn der in dem Vorratsbehälter wirksame Luftdruck dagegen über den Arbeitsdruckanschluss abgesenkt wird, so wird Arbeitsfluid aus dem Gehäuse des Retarders aufgrund des dort herrschenden Überdrucks zurück in den Vorratsbehälter gedrückt und dadurch das in dem Retarder erzeugte Bremsmoment verringert.

Um beim Einschalten und Ausschalten des Retarders sowie bei der Änderung des von dem Fahrer angeforderten Bremsmomentes das entsprechende Bremsmoment schnell zur Verfügung zu stellen, ist eine schnelle Belüftung und Entlüftung des Vorratsbehälters erforderlich. Hierzu ist es vorteilhaft, wenn die Einlassventile und Auslassventile der pneumatischen Steuerungsvorrichtung möglichst große Öffnungsquerschnitte sowie kurze Schaltzeiten aufweisen. Besonders wichtig ist dabei eine schnelle Entlüftung des Vorratsbehälters, damit das Bremsmoment des Retarders im Übergang zwischen dem Ende einer Gefällstrecke und dem Beginn eines ebenen Streckenabschnitts schnell abgeschaltet werden kann.

Zu einem anderen Thema offenbart EP1970789 A2 eine Pneumatikregeleinrichtung zur Bereitstellung eines vorgebbaren Ansteuerluftdrucks in einer zu einem Verbraucher führenden Verbraucherleitung.

In der DE 10 2005 050 480 B3 ist eine gattungsgemäße pneumatische Steuerungsvorrichtung für einen hydrodynamischen Retarder beschrieben, welche ein Einlassventil und ein Auslassventil aufweist. Das Einlassventil ist als ein 2/2-Wege-Magnetschaltventil ausgebildet sowie im unbestromten Zustand geschlossen und im bestromten Zustand geöffnet. Über das Einlassventil ist eine zu einem Arbeitsdruckanschluss führende Arbeitsdruckleitung mit einer an eine Druckluftquelle angeschlossenen Belüftungsleitung verbindbar. Das Auslassventil ist ebenfalls als ein 2/2-Wege-Magnetschaltventil ausgebildet, jedoch im unbestromten Zustand geöffnet und im bestromten Zustand geschlossen. Über das Auslassventil ist die Arbeitsdruckleitung mit einer an einen Entlüftungsausgang angeschlossenen Entlüftungsleitung verbindbar.

Um ein schnelles Entlüften des Vorratsbehälters und damit ein schnelles Abschalten des Retarders zu ermöglichen, ist dem Einlassventil seitens der Druckluftquelle ein Umschaltventil vorgeschaltet. Dieses Umschaltventil ist als ein 3/2-Wege-Magnetschaltventil ausgebildet, durch welches die Belüftungsleitung im unbestromten, also nichtumgeschalteten Zustand des Umschaltventils mit einem Entlüftungsausgang verbunden ist, und durch welches die Belüftungsleitung im bestromten, also umgeschalteten Zustand des Umschaltventils mit der Druckluftquelle verbunden ist. Dadurch ist die Möglichkeit gegeben, den Vorratsbehälter des Retarders im unbestromten Zustand des Umschaltventils sowohl über das Auslassventil als auch über das Einlassventil zu entlüften, wodurch das Bremsmoment des Retarders aufgrund des insgesamt größeren Öffnungsquerschnitts beider Ventile schneller abgeschaltet werden kann.

Nachteilig an dieser bekannten Steuerungsvorrichtung sind jedoch der Mehraufwand für die Anordnung des Umschaltventils und die Möglichkeit, dass die als direkt ansteuerbare Magnetventile ausgeführten Schaltventile sowohl durch einen elektrischen Defekt als auch durch ein Verklemmen ihrer Steuerkolben ausfallen können.

Der vorliegenden Erfindung liegt daher die Aufgabe zugrunde, eine pneumatische Steuerungsvorrichtung eines hydrodynamischen Retarders der eingangs genannten Bauart vorzustellen, mit der in Verbindung mit einer niedrigeren Ausfallwahrscheinlichkeit zumindest ein schnelleres Abschalten des Retarders möglich ist.

Diese Aufgabe ist durch eine Steuerungsvorrichtung mit den Merkmalen des Anspruchs 1 gelöst. Vorteilhafte Ausgestaltungen und Weiterbildungen dieser Steuerungsvorrichtung sind in den abhängigen Ansprüchen definiert.

Die Erfindung betrifft demnach eine pneumatische Steuerungsvorrichtung für einen hydrodynamischen Retarder, mit einem Arbeitsdruckanschluss, der mit einem Vorratsbehälter des Retarders in Verbindung steht, mit mindestens einem Einlassventil, über welches eine zu dem Arbeitsdruckanschluss führende Arbeitsdruckleitung mit einer an eine Druckluftquelle angeschlossenen Belüftungsleitung verbindbar ist, und mit mindestens einem Auslassventil, über welches die Arbeitsdruckleitung mit einer an einen Entlüftungsausgang angeschlossenen Entlüftungsleitung verbindbar ist.

Zur Lösung der gestellten Aufgabe ist vorgesehen, dass in der Steuerungsvorrichtung zwei zueinander parallel geschaltete Auslassventile angeordnet sind, über welche die Arbeitsdruckleitung mit der Entlüftungsleitung verbindbar ist.

Dadurch, dass gemäß der Erfindung zwei parallel geschaltete Auslassventile vorhanden sind, kann zum einen ein größerer Öffnungsquerschnitt zur Entlüftung des Vorratsbehälters des Retarders freigeschaltet und damit der Retarder schneller abgeschaltet werden. Zudem ist durch diese Konstruktion die Ausfallwahrscheinlichkeit der Steuerungsvorrichtung reduziert, da der erwähnte Vorratsbehälter auch bei einem Ausfall eines der Auslassventile noch funktionstüchtig ist, auch wenn die Entlüftung des Vorratsbehälters dann langsamer erfolgt.

Die beiden Auslassventile können als direkt ansteuerbare 2/2-Wege-Magnetschaltventile ausgebildet sein, welche im unbestromten Zustand geöffnet und im bestromten Zustand geschlossen sind.

Alternativ dazu kann vorgesehen sein, dass die beiden Auslassventile als indirekt ansteuerbare, pneumatisch druckgesteuerte 2/2-Wege-Schaltventile ausgebildet sind, welche bei drucklosem Steuereingang geöffnet und bei druckführendem Steuereingang geschlossen sind. Diesen beiden druckgesteuerten Auslassventilen ist ein gemeinsames Vorsteuerventil zugeordnet ist, welches als ein 3/2-Wege-Magnetschaltventil ausgebildet ist, und über welches im unbestromten Zustand die Steuereingänge der Auslassventile entlüftet sowie im bestromten Zustand über eine Verbindungsleitung mit der Belüftungsleitung belüftet sind. Durch die indirekt über ein Vorsteuerventil pneumatisch ansteuerbare Ausführung der Auslassventile können deren Öffnungsquerschnitte mit einem niedrigeren Steuerstrom geschlossen werden als bei einer direkt elektrisch ansteuerbaren Ausführungsform der Auslassventile.

Um einen größeren Öffnungsquerschnitt zur Entlüftung des Vorratsbehälters des Retarders zur Verfügung zu stellen, weisen die beiden Auslassventile zumindest in Summe einen größeren Öffnungsquerschnitt auf als ein bislang bei bekannten Steuerungsvorrichtungen alleine verwendetes Auslassventil. Die Öffnungsquerschnitte der Auslassventile können somit auch jeweils kleiner als der Öffnungsquerschnitt des bislang alleine verwendeten Auslassventils sein, solange die Öffnungsquerschnitte beider Auslassventile in Summe größer als der Öffnungsquerschnitt des bislang alleine verwendeten Auslassventils sind. Durch einen kleineren Öffnungsquerschnitt sind die Auslassventile auch insgesamt kompakter ausgeführt und benötigen in der direkt ansteuerbaren Ausführung einen geringeren Steuerstrom auf.

Die beiden Auslassventile sind bevorzugt auch baugleich ausgebildet, da hierdurch bei deren Beschaffung und Lagerhaltung Kosten eingespart werden können.

Um nach dem Abschalten des Retarders ein anliegendes Restbremsmoment desselben zu vermeiden, ist bevorzugt vorgesehen, dass zwischen der Arbeitsdruckleitung und der Entlüftungsleitung ein Ablassventil angeordnet ist, welches bei Überschreiten eines vorgegebenen Öffnungsdruckes durch den in der Arbeitsdruckleitung anliegenden Arbeitsdruck geschlossen ist, und welches bei Erreichen oder Unterschreiten des Öffnungsdruckes durch den Arbeitsdruck selbsttätig öffnet. Hierdurch wird der in dem Vorratsbehälter des Retarders wirksame Luftdruck bei entlüfteter Arbeitsdruckleitung vollständig abgebaut, also auch bei störungsbedingt geschlossenen Auslassventilen auf den Umgebungsdruck abgesenkt, sodass das Arbeitsfluid weitgehend aus dem Gehäuse des Retarders in den Vorratsbehälter gedrückt und so durch den Retarder kein Restbremsmoment erzeugt wird. Der Öffnungsdruck des Ablassventils beträgt beispielsweise 5 × 10⁴ Pa.

Zusätzlich zu den zwei parallel geschalteten Auslassventilen können auch zwei zueinander parallel geschaltete Einlassventile angeordnet sein, über welche die Arbeitsdruckleitung mit der Belüftungsleitung verbindbar ist. Dadurch kann ein größerer Öffnungsquerschnitt zur Belüftung des Vorratsbehälters des Retarders freigeschaltet und damit der Retarder schneller eingeschaltet werden. Zudem ist dadurch die Ausfallwahrscheinlichkeit der Steuerungsvorrichtung reduziert, da der Vorratsbehälter auch bei einem Ausfall eines der beiden Einlassventile noch funktionstüchtig ist, auch wenn die Belüftung des Vorratsbehälters dann langsamer erfolgt.

Die beiden Einlassventile können als direkt ansteuerbare 2/2-Wege-Magnetschaltventile ausgebildet sein, die im unbestromten Zustand geschlossen und im bestromten Zustand geöffnet sind.

Alternativ dazu können die beiden Einlassventile jedoch auch als indirekt ansteuerbare, pneumatisch druckgesteuerte 2/2-Wege-Schaltventile ausgebildet sein, welche bei drucklosem Steuereingang geschlossen und bei druckführendem Steuereingang geöffnet sind. Den druckgesteuerten Einlassventilen ist ein gemeinsames Vorsteuerventil zugeordnet, welches als ein 3/2-Wege-Magnetschaltventil ausgebildet ist, und über welches die Steuereingänge der beiden Einlassventile im unbestromten Zustand entlüftet und im bestromten Zustand über eine Verbindung mit der Belüftungsleitung belüftet sind. Durch die indirekt über ein Vorsteuerventil pneumatisch ansteuerbare Ausführung der Einlassventile können deren Öffnungsquerschnitte mit einem niedrigeren Steuerstrom geöffnet werden als bei der direkt elektrisch ansteuerbaren Ausführung der Einlassventile.

Um einen größeren Öffnungsquerschnitt zur Belüftung des Vorratsbehälters des Retarders zur Verfügung zu stellen, weisen auch die beiden Einlassventile zumindest in Summe einen größeren Öffnungsquerschnitt auf als ein bislang alleine verwendetes Einlassventil in einer bekannten Steuerungsvorrichtung. Die Öffnungsquerschnitte der Einlassventile können somit auch jeweils kleiner als der Öffnungsquerschnitt des bislang alleine verwendeten Einlassventils sein, solange die Öffnungsquerschnitte beider Einlassventile in Summe größer als der Öffnungsquerschnitt des bislang alleine verwendeten Einlassventils sind. Durch einen kleineren Öffnungsquerschnitt sind die Einlassventile auch insgesamt kompakter ausgeführt und weisen in der direkt ansteuerbaren Ausführung eine geringere Stromaufnahme auf.

Die beiden Einlassventile sind erfindungsgemäß unterschiedliche Öffnungsquerschnitte aufweisen. Hierdurch kann bei bestimmten Anwendungsbeispielen jeweils eine konstruktiv einfachere, wirksamere und/oder kostengünstiger herstellbare Bauform realisiert sein.

Schließlich kann eine die Merkmale der Erfindung aufweisende Steuerungsvorrichtung Auslassventile aufweisen, welche nicht als 2/2-Wege-Schaltventile sondern als 3/2-Wege-Schaltventile ausgebildet sind, wobei jeweils einer derer zwei Durchlassanschlüsse verschlossen ist. Hierdurch kann die Steuerungsvorrichtung konstruktiv besonders vorteilhaft aufgebaut und kostengünstiger als mit 2/2-Wege-Schaltventilen herstellbar sein.

Die Erfindung wird nachstehend anhand von in der beigefügten Zeichnung dargestellten Ausführungsbeispielen näher erläutert. In der Zeichnung zeigt
Fig. 1 eine erste Ausführungsform einer nicht erfindungsgemäßen pneumatischen Steuerungsvorrichtung eines hydrodynamischen Retarders in einer schematischen Ansicht,
Fig. 2 eine zweite Ausführungsform einer nicht erfindungsgemäßen pneumatischen Steuerungsvorrichtung eines hydrodynamischen Retarders in einer schematischen Ansicht,
Fig. 3 eine dritte Ausführungsform einer erfindungsgemäßen pneumatischen Steuerungsvorrichtung eines hydrodynamischen Retarders in einer schematischen Ansicht,
Fig. 4 eine vierte Ausführungsform einer erfindungsgemäßen pneumatischen Steuerungsvorrichtung eines hydrodynamischen Retarders in einer schematischen Ansicht,
Fig. 5 eine erste Ausführungsform einer bekannten pneumatischen Steuerungsvorrichtung eines hydrodynamischen Retarders in einer schematischen Ansicht, und
Fig. 6 eine zweite Ausführungsform einer bekannten pneumatischen Steuerungsvorrichtung eines hydrodynamischen Retarders in einer schematischen Ansicht.

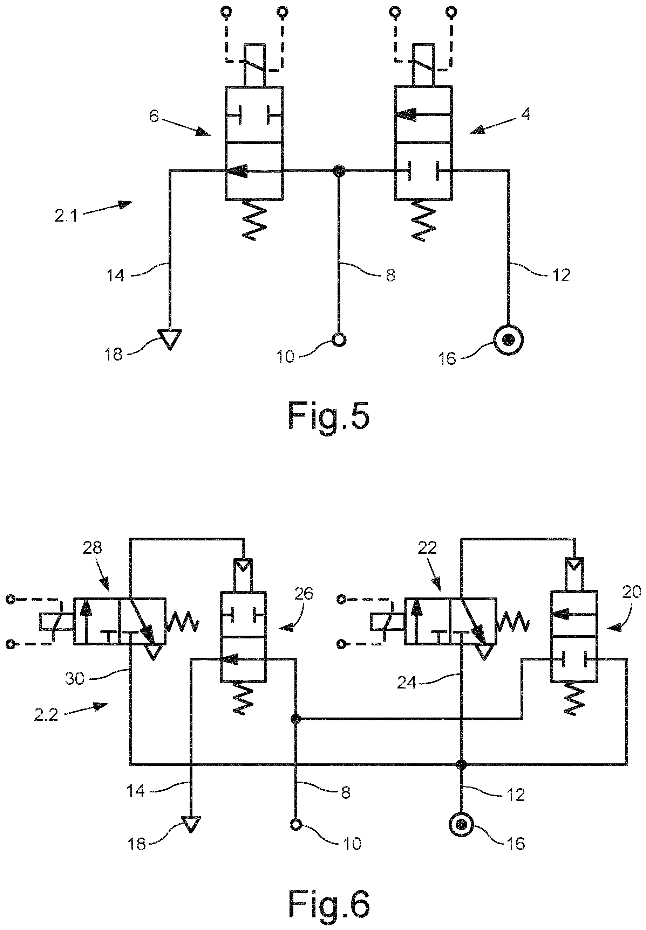

In Fig. 5 ist demnach eine erste Ausführungsform einer bekannten pneumatischen Steuerungsvorrichtung 2.1 eines hydrodynamischen Retarders schematisch abgebildet, die mit Ausnahme des dort vorgesehenen Umschaltventils der aus der DE 10 2005 050 480 B3 bekannten Steuerungsvorrichtung entspricht. Die Steuerungsvorrichtung 2.1 weist ein Einlassventil 4, ein Auslassventil 6, eine Arbeitsdruckleitung 8 mit einem Arbeitsdruckanschluss 10, eine Belüftungsleitung 12 und eine Entlüftungsleitung 14. Der Arbeitsdruckanschluss 10 steht in hier nicht dargestellter Weise, jedoch ähnlich wie in der DE 10 2005 050 480 B3 gezeigt, mit einem Vorratsbehälter des Retarders in Verbindung. Das in dem Retarder erzeugte Bremsmoment wird durch eine Erhöhung des an dem Arbeitsdruckanschluss 10 anliegenden Luftdrucks vergrößert und durch eine Reduzierung des anliegenden Luftdrucks verringert.

Das Einlassventil 4 ist als ein 2/2-Wege-Magnetschaltventil ausgebildet, welches im unbestromten Zustand geschlossen und im bestromten Zustand geöffnet ist. Über das Einlassventil 4 ist die zu dem Arbeitsdruckanschluss 10 führende Arbeitsdruckleitung 8 mit der Belüftungsleitung 12 verbindbar, welche an eine Druckluftquelle 16 angeschlossen ist. Das Auslassventil 6 ist ebenfalls als ein 2/2-Wege-Magnetschaltventil ausgebildet, welches im unbestromten Zustand geöffnet sowie im bestromten Zustand geschlossen ist. Über das Auslassventil 4 ist die zu dem Arbeitsdruckanschluss 10 führende Arbeitsdruckleitung 8 mit der Entlüftungsleitung 14 verbindbar, die an einen Entlüftungsausgang 18 angeschlossen ist.

Es ist jedoch auch allgemein bekannt, dass anstelle eines direkt ansteuerbaren, als ein Magnetschaltventil ausgebildeten Schaltventils auch ein indirekt ansteuerbares, pneumatisch oder hydraulisch druckgesteuertes Schaltventil verwendet werden kann, welchem zur Ansteuerung ein als ein 3/2-Wege-Magnetschaltventil ausgebildetes Vorsteuerventil zugeordnet ist. Durch eine vorgesteuerte Ausführung eines Ventils kann dessen Öffnungsquerschnitt über das Vorsteuerventil mittels eines geringeren Steuerstroms als bei einem direkt ansteuerbaren Magnetventil geöffnet oder geschlossen werden.

Eine diesem entsprechende Ausführung einer pneumatischen Steuerungsvorrichtung 2.2 eines hydrodynamischen Retarders ist in Fig. 6 schematisch abgebildet. Diese Steuerungsvorrichtung 2.2 weist ein Einlassventil 20 und ein Auslassventil 26 auf, welche als pneumatisch druckgesteuerte 2/2-Wege-Schaltventile ausgebildet sind, und denen jeweils ein als ein 3/2-Wege-Magnetschaltventil ausgebildetes Vorsteuerventil 22, 28 zugeordnet ist. Das Einlassventil 20 ist bei drucklosem Steuereingang geschlossen und bei druckführendem Steuereingang geöffnet. Das Auslassventil 26 ist dagegen bei drucklosem Steuereingang geöffnet und bei druckführendem Steuereingang geschlossen. Der Steuereingang des Einlassventils 20 und der Steuereingang des Auslassventils 26 sind im unbestromten Zustand des jeweiligen Vorsteuerventils 22, 28 entlüftet und im bestromten Zustand des jeweiligen Vorsteuerventils 22, 28 über jeweils eine an die Belüftungsleitung 12 angeschlossene Verbindungsleitung 24, 30 belüftet.

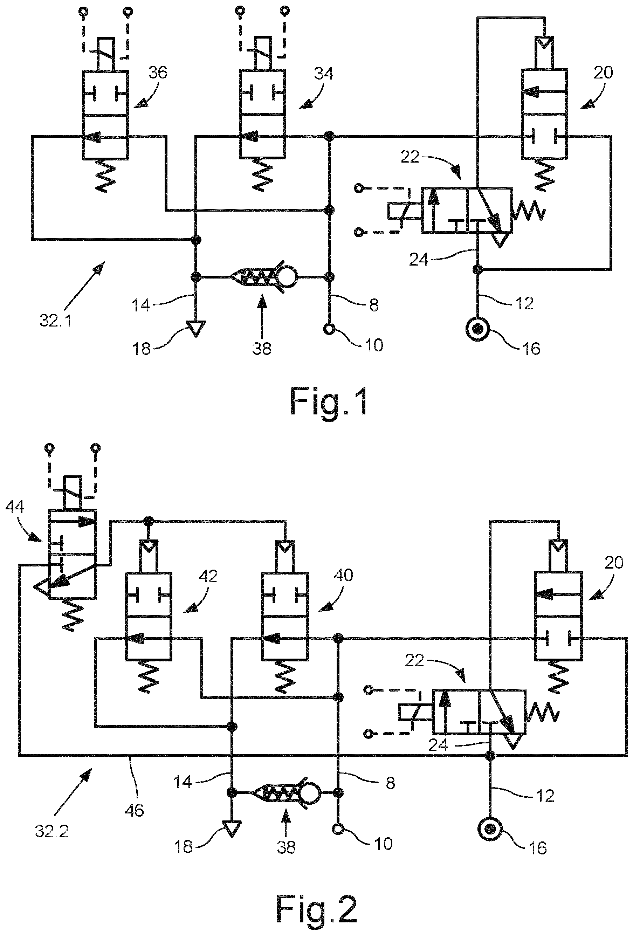

Eine erste Ausführungsform einer erfindungsgemäßen pneumatischen Steuerungsvorrichtung 32.1 eines hydrodynamischen Retarders, welche in Fig. 1 schematisch abgebildet ist, weist ein indirekt ansteuerbares Einlassventil 20 und ein diesem zugeordnetes erstes Vorsteuerventil 22 gemäß Fig. 6 auf. Anstelle eines einzigen Auslassventils sind nun jedoch zwei Auslassventile 34, 36 vorhanden, welche zueinander parallel geschaltet sind, und über welche jeweils die Arbeitsdruckleitung 8 mit der Entlüftungsleitung 14 verbindbar ist.

Die beiden Auslassventile 34, 36 sind jeweils als 2/2-Wege-Magnetschaltventile ausgebildet, welche im unbestromten Zustand geöffnet und im bestromten Zustand geschlossen sind. Durch die Verwendung von zwei zueinander parallel geschalteten Auslassventilen 34, 36 steht zum Entlüften der Arbeitsdruckleitung 8 beziehungsweise des an den Arbeitsdruckanschluss 10 angeschlossenen Vorratsbehälters des Retarders ein größerer Öffnungsquerschnitt beziehungsweise Durchströmquerschnitt zur Verfügung, sodass dadurch das Bremsmoment des Retarders schneller reduziert und der Retarder auch schneller abgeschaltet werden kann als beispielsweise bei der Steuerungsvorrichtung gemäß der DE 10 2005 050 480 B3. Zudem ist durch die Verwendung der beiden Auslassventile 34, 36 die Ausfallwahrscheinlichkeit der erfindungsgemäßen Steuerungsvorrichtung 32.1 reduziert, weil bei einem Ausfall eines der beiden Auslassventile 34, 36, insbesondere bei einer Verklemmung eines Steuerkolbens im geschlossenen Zustand des betreffenden Auslassventils 34, 36, eine Entlüftung der Arbeitsdruckleitung 8 und damit des an den Arbeitsdruckanschluss 10 angeschlossenen Vorratsbehälters des Retarders, wenn auch verlangsamt, über das intakte Auslassventil 34 oder das intakte Auslassventil 36 noch möglich ist.

Um beim Abschalten des Retarders eine vollständige Entlüftung des Vorratsbehälters zu bewirken, also ein Restbremsmoment des Retarders zu vermeiden, ist zusätzlich zwischen der Arbeitsdruckleitung 8 und der Entlüftungsleitung 14 ein Ablassventil 38 angeordnet, welches beim Überschreiten eines vorgegebenen Öffnungsdruckes durch den in der Arbeitsdruckleitung 8 anliegenden Arbeitsdruck geschlossen ist und bei Erreichen oder Unterschreiten des Öffnungsdruckes durch den Arbeitsdruck selbsttätig öffnet. Der Öffnungsdruck des Ablassventils 38 beträgt vorzugsweise 5 × 10⁴ Pa.

Eine zweite Ausführungsform der erfindungsgemäßen pneumatischen Steuerungsvorrichtung 32.2 eines hydrodynamischen Retarders, die in Fig. 2 schematisch abgebildet ist, unterscheidet sich von der Steuerungsvorrichtung 32.1 gemäß Fig. 1 dadurch, dass die beiden Auslassventile 40, 42 nunmehr als pneumatisch druckgesteuerte 2/2-Wege-Schaltventile ausgebildet sind, welche bei drucklosem Steuereingang geöffnet und bei druckführendem Steuereingang geschlossen sind. Den beiden Auslassventilen 40, 42 ist ein gemeinsames Vorsteuerventil 44 zugeordnet, welches als ein 3/2-Wege-Magnetschaltventil ausgebildet ist. Die Steuereingänge der beiden Auslassventile 40, 42 sind im unbestromten Zustand des zugeordneten Vorsteuerventils 44 entlüftet und im bestromten Zustand des Vorsteuerventils 44 über eine an die Belüftungsleitung 12 angeschlossene Verbindungsleitung 46 belüftet.

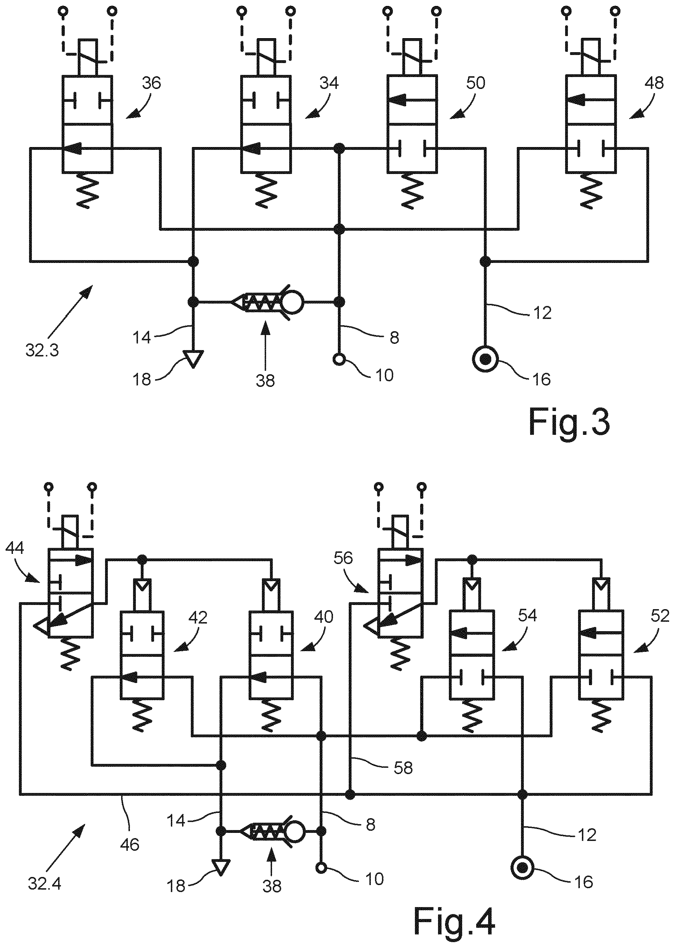

Eine dritte Ausführungsform der erfindungsgemäßen pneumatischen Steuerungsvorrichtung 32.3 eines hydrodynamischen Retarders, welche in Fig. 3 schematisch abgebildet ist, unterscheidet sich von der Steuerungsvorrichtung 32.1 gemäß Fig. 1 dadurch, dass nunmehr auch anstelle eines einzigen Einlassventils 20 nun zwei Einlassventile 48, 50 angeordnet sind, welche zueinander parallel geschaltet sind, und über welche die Arbeitsdruckleitung 8 mit der Belüftungsleitung 12 verbindbar ist. Die beiden Einlassventile 48, 50 sind jeweils als 2/2-Wege-Magnetschaltventile ausgebildet, welche im unbestromten Zustand geschlossen und im bestromten Zustand geöffnet sind. Durch die Verwendung von zwei schaltungstechnisch parallel zueinander angeordneten Einlassventilen 48, 50 steht zum Belüften der Arbeitsdruckleitung 8 beziehungsweise des an den Arbeitsdruckanschluss 10 angeschlossenen Vorratsbehälters des Retarders ein größerer Öffnungsquerschnitt beziehungsweise Durchströmquerschnitt zur Verfügung, sodass dadurch das Bremsmoment des Retarders schneller vergrößert und der Retarder auch schneller eingeschaltet werden kann. Zudem ist durch die Verwendung der beiden Einlassventile 48, 50 die Ausfallwahrscheinlichkeit der Steuerungsvorrichtung 32.3 reduziert, da bei einem Ausfall eines der beiden Einlassventile 48, 50, insbesondere bei einem Ausfall eines Schaltmagneten oder einer Verklemmung eines Steuerkolbens im geschlossenen Zustand des betreffenden Auslassventils 48, 50, eine Belüftung der Arbeitsdruckleitung 8 und damit des an den Arbeitsdruckanschluss 10 angeschlossenen Vorratsbehälters des Retarders, wenn auch verlangsamt über das intakte Einlassventil 48 oder das intakte Einlassventil 50 noch möglich ist.

Eine vierte Ausführungsform der erfindungsgemäßen pneumatischen Steuerungsvorrichtung 32.4 eines hydrodynamischen Retarders, die in Fig. 4 schematisch abgebildet ist, unterscheidet sich von der Steuerungsvorrichtung 32.2 gemäß Fig. 2 dadurch, dass anstelle eines einzigen Einlassventils 20 nun zwei Einlassventile 52, 54 vorhanden sind, welche zueinander parallel geschaltet angeordnet sind, und über welche die Belüftungsleitung 12 mit der Arbeitsdruckleitung 8 verbindbar ist. Die beiden Einlassventile 52, 54 sind nunmehr jedoch, wie die beiden Auslassventile 40, 42, als pneumatisch druckgesteuerte 2/2-Wege-Schaltventile ausgebildet, welche bei drucklosem Steuereingang geschlossen und bei druckführendem Steuereingang geöffnet sind. Den beiden Einlassventilen 52, 54 ist ein gemeinsames Vorsteuerventil 56 zugeordnet, welches als ein 3/2-Wege-Magnetschaltventil ausgebildet ist. Die Steuereingänge der beiden Einlassventile 52, 54 sind im unbestromten Zustand des Vorsteuerventils 56 entlüftet und im bestromten Zustand des Vorsteuerventils 56 über eine an die Belüftungsleitung 12 angeschlossene Verbindungsleitung 58 belüftet.

Die in den Figuren 1 bis 4 als 2/2-Wege-Schaltventile dargestellten Auslassventile 34, 36, 40, 42 können auch durch 3/2-Wege-Schaltventile ersetzt sein, wobei jeweils einer derer zwei Durchlassanschlüsse verschlossen ist. Hierdurch kann eine im Ergebnis konstruktiv einfachere Bauform realisiert sein.

Bei den in den Figuren 3 und 4 dargestellten Varianten weisen die jeweils beiden Einlassventile 48, 50; 52, 54 unterschiedliche Öffnungsquerschnitte auf.

### Bezugszeichenliste (Bestandteil der Beschreibung)

- 2.1: Steuerungsvorrichtung (Stand der Technik)
- 2.2: Steuerungsvorrichtung (Stand der Technik)
- 4: Einlassventil, 2/2-Wege-Magnetschaltventil
- 6: Auslassventil, 2/2-Wege-Magnetschaltventil
- 8: Arbeitsdruckleitung
- 10: Arbeitsdruckanschluss
- 12: Belüftungsleitung
- 14: Entlüftungsleitung
- 16: Druckluftquelle
- 18: Entlüftungsausgang
- 20: Einlassventil, druckgesteuertes 2/2-Wege-Schaltventil
- 22: Vorsteuerventil, 3/2-Wege-Magnetschaltventil
- 24: Verbindungsleitung
- 26: Auslassventil, druckgesteuertes 2/2-Wege-Schaltventil
- 28: Vorsteuerventil, 3/2-Wege-Magnetschaltventil
- 30: Verbindungsleitung
- 32.1: Steuerungsvorrichtung (erste erfindungsgemäße Ausführungsform)
- 32.2: Steuerungsvorrichtung (zweite erfindungsgemäße Ausführungsform)
- 32.3: Steuerungsvorrichtung (dritte erfindungsgemäße Ausführungsform)
- 32.4: Steuerungsvorrichtung (vierte erfindungsgemäße Ausführungsform)
- 34: Erstes Auslassventil, 2/2-Wege-Magnetschaltventil
- 36: Zweites Auslassventil, 2/2-Wege-Magnetschaltventil
- 38: Ablassventil
- 40: Erstes Auslassventil, druckgesteuertes 2/2-Wege-Schaltventil
- 42: Zweites Auslassventil, druckgesteuertes 2/2-Wege-Schaltventil
- 44: Vorsteuerventil, 3/2-Wege-Magnetschaltventil
- 46: Verbindungsleitung
- 48: Erstes Einlassventil, 2/2-Wege-Magnetschaltventil
- 50: Zweites Einlassventil, 2/2-Wege-Magnetschaltventil
- 52: Erstes Einlassventil, druckgesteuertes 2/2-Wege-Schaltventil
- 54: Zweites Einlassventil, druckgesteuertes 2/2-Wege-Schaltventil
- 56: Vorsteuerventil, 3/2-Wege-Magnetschaltventil
- 58: Verbindungsleitung

## Patentansprüche

1. Pneumatische Steuerungsvorrichtung (32.1, 32.2, 32.3, 32.4) für einen hydrodynamischen Retarder, mit einem Arbeitsdruckanschluss (10), der mit einem Vorratsbehälter des Retarders in Verbindung steht, mit mindestens zwei Einlassventile (20, 48, 50, 52, 54 ), über welches eine zu dem Arbeitsdruckanschluss (10) führende Arbeitsdruckleitung (8) mit einer an eine Druckluftquelle (16) an-geschlossenen Belüftungsleitung (12) verbindbar ist, und mit mindestens einem Auslassventil, über welches die Arbeitsdruckleitung (8) mit einer an einen Entlüftungsausgang (18) angeschlossenen Entlüftungsleitung (14) verbindbar ist, wobei in der Steuerungsvorrichtung (32.1, 32.2, 32.3, 32.4) zwei zueinander parallel geschaltete Auslassventile (34, 36; 40, 42) angeordnet sind, über welche die Arbeitsdruckleitung (8) mit der Entlüftungsleitung (14) verbindbar ist, **dadurch gekennzeichnet, dass** die beiden Einlassventile (48, 50; 52, 54) unterschiedliche Öffnungsquerschnitte aufweisen.

2. Steuerungsvorrichtung nach Anspruch 1, **dadurch gekennzeichnet, dass** die beiden Auslassventile (34, 36) als 2/2-Wege-Magnetschaltventile ausgebildet sind, welche im unbestromten Zustand geöffnet und im bestromten Zustand geschlossen sind.

3. Steuerungsvorrichtung nach Anspruch 1, **dadurch gekennzeichnet, dass** die beiden Auslassventile (40, 42) als pneumatisch druckgesteuerte 2/2-Wege-Schaltventile ausgebildet sind, welche bei drucklosem Steuereingang geöffnet und bei druckführendem Steuereingang geschlossen sind, dass den Auslass-ventilen (40, 42) ein gemeinsames Vorsteuerventil (44) zugeordnet ist, welches als ein 3/2-Wege-Magnetschaltventil ausgebildet ist, und über welches im un-bestromten Zustand die Steuereingänge der Auslassventile (40, 42) entlüftet sowie im bestromten Zustand über eine Verbindungsleitung (46) mit der Belüftungsleitung (12) belüftet sind.

4. Steuerungsvorrichtung nach einem der Ansprüche 1 bis 3, **dadurch gekennzeichnet, dass** zwischen der Arbeitsdruckleitung (8) und der Entlüftungsleitung (14) ein Ablassventil (38) angeordnet ist, welches bei Überschreiten eines vor-gegebenen Öffnungsdruckes durch den in der Arbeitsdruckleitung (8) anliegenden Arbeitsdruck geschlossen ist, und welches bei Erreichen oder Unter-schreiten des Öffnungsdruckes durch den Arbeitsdruck selbsttätig öffnet.

5. Steuerungsvorrichtung nach Anspruch 4, **dadurch gekennzeichnet, dass** der Öffnungsdruck des Ablassventils (38) 5 × 10⁴ Pa beträgt.

6. Steuerungsvorrichtung (32.3, 32.4) nach einem der Ansprüche 1 bis 5, **dadurch gekennzeichnet, dass** in dieser zwei zueinander parallel geschaltete Einlassventile (48, 50; 52, 54) angeordnet sind, über welche die Arbeitsdruckleitung (8) mit der Belüftungsleitung (12) verbindbar ist.

7. Steuerungsvorrichtung (32.3) nach Anspruch 6, **dadurch gekennzeichnet, dass** die beiden Einlassventile (48, 50) als 2/2-Wege-Magnetschaltventile ausgebildet sind, welche im unbestromten Zustand geschlossen sowie im bestromten Zu-stand geöffnet sind.

8. Steuerungsvorrichtung (32.4) nach Anspruch 6, **dadurch gekennzeichnet, dass** die beiden Einlassventile (52, 54) als pneumatisch druckgesteuerte 2/2-Wege-Schaltventile ausgebildet sind, welche bei drucklosem Steuereingang geschlossen sowie bei druckführendem Steuereingang geöffnet sind, und dass den Einlassventilen (52, 54) ein gemeinsames Vorsteuerventil (56) zugeordnet ist, welches als ein 3/2-Wege-Magnetschaltventil ausgebildet ist, und über welches die Steuereingänge der Einlassventile (52, 54) im unbestromten Zustand entlüftet sowie im bestromten Zustand über eine Verbindungsleitung (58) mit der Belüftungsleitung (12) belüftet sind.

9. Steuerungsvorrichtung nach einem der Ansprüche 1 bis 8, **dadurch gekennzeichnet, dass** die beiden Auslassventile (34, 36; 40, 42) und/oder die beiden Einlassventile (48, 50; 52, 54) jeweils zumindest in Summe einen größeren Öffnungsquerschnitt aufweisen als ein bislang in einer konventionellen Steuerungsvorrichtung alleine verwendetes Auslassventil beziehungsweise Einlassventil (6; 26; 4; 20).

10. Steuerungsvorrichtung nach einem der Ansprüche 1 bis 9, **dadurch gekennzeichnet, dass** die beiden Auslassventile (34, 36; 40, 42) und/oder die beiden Einlassventile (48, 50; 52, 54) jeweils baugleich ausgeführt sind.

11. Steuerungsvorrichtung nach einem der Ansprüche 2 oder 3, **dadurch gekennzeichnet, dass** anstelle von als 2/2-Wege-Schaltventile ausgebildete Auslassventile (34, 36, 40, 42) 3/2-Wege-Schaltventile verbaut sind, wobei jeweils einer derer zwei Durchlassanschlüsse verschlossen ist.

## Claims

1. A pneumatic control device (32.1, 32.2, 32.3, 32.4) for a hydrodynamic retarder, having a working pressure port (10), which is connected to a supply container of the retarder, having at least two inlet valves (20, 48, 50, 52, 54), via which a working pressure line (8) leading to the working pressure port (10) can be connected to a ventilation line (12) connected to a compressed air source (16), and having at least one outlet valve, via which the working pressure line (8) can be connected to a venting line (14) connected to a venting outlet (18),
wherein two outlet valves (34, 36 ; 40, 42) connected in parallel to each other are arranged in the control device (32.1, 32.2, 32.3, 32.4), via which the working pressure line (8) can be connected to the venting line (14), **characterized in that** the two inlet valves (48, 50; 52, 54) have different opening cross-sections.

2. The control device according to claim 1, **characterized in that** the two outlet valves (34, 36) are embodied as 2/2-way solenoid switching valves, which are opened in the currentless state and are closed in the energized state.

3. The control device according to claim 1, **characterized in that** the two outlet valves (40, 42) are embodied as pneumatically pressure-controlled 2/2-way switching valves, which in the event of a pressure-less control input are opened and in the event of a pressure-conducting control input are closed, **in that** a common pilot valve (44) is assigned to the outlet valves (40, 42), which is embodied as a 3/2-way solenoid switching valve, and via which in the currentless state the control inputs of the outlet valves (40, 42) are deaerated and in the energized state are aerated via a connecting line (46) with the ventilation line (12).

4. The control device according to any of claims 1 to 3, **characterized in that** a discharge valve (38) is arranged between the working pressure line (8) and the venting line (14), said discharge valve which is closed in the event of an exceeding of a pre-defined opening pressure by the working pressure present in the working pressure line (8), and which automatically opens in the event of reaching or falling below the opening pressure by the working pressure.

5. The control device according to claim 4, **characterized in that** the opening pressure of the discharge valve (38) is 5 × 10⁴ Pa.

6. The control device (32.3, 32.4) according to any of claims 1 to 5, **characterized in that** two inlet valves (48, 50; 52, 54) connected in parallel to each other are arranged therein, via which the working pressure line (8) can be connected to the ventilation line (12).

7. The control device (32.3) according to claim 6, **characterized in that** the two inlet valves (48, 50) are embodied as 2/2-way solenoid switching valves which are closed in the currentless state and opened in the energized state.

8. The control device (32.4) according to claim 6, **characterized in that** both inlet valves (52, 54) are embodied as pneumatically pressure controlled 2/2-way switching valves which are closed in the event of a pressureless control input and opened in the event of a pressure-conducting control input, and **in that** a common pilot valve (56) is assigned to the inlet valves (52, 54), said pilot valve which is embodied as a 3/2-way solenoid switching valve, and via which in the currentless state the control inputs of the inlet valves (52, 54) are deaerated and in the energized state are aerated via a connecting line (58)with the ventilation line (12).

9. The control device according to any of claims 1 to 8, **characterized in that** the two outlet valves (34, 36; 40, 42) and/or the two inlet valves (48, 50; 52, 54) each have at least in total a greater opening cross-section than an outlet valve or inlet valve (6; 26; 4; 20) used alone up to now in a convention control device.

10. The control device according to any of claims 1 to 9, **characterized in that** the two outlet valves (34, 36; 40, 42) and/or the two inlet valves (48, 50; 52, 54) are each designed structurally identical.

11. The control device according to any of claims 2 or 3, **characterized in that** 3/2-way switching valves are built in place of outlet valves (34, 36, 40, 42) embodied as 2/2-way switching valves, wherein in each case one of their two outlet ports is closed.

## Revendications

1. Dispositif de commande (32.1, 32.2, 32.3, 32.4) pneumatique pour un ralentisseur hydrodynamique, avec un raccord de pression de travail (10), qui est en liaison avec un réservoir de stockage du ralentisseur, avec au moins deux soupapes d'admission (20, 48, 50, 52, 54), par l'intermédiaire desquelles une conduite de pression de travail (8) menant au raccord de pression de travail (10) peut être reliée à une conduite d'aération (12) raccordée à une source d'air comprimé (16), et avec au moins une soupape d'échappement, par l'intermédiaire de laquelle la conduite de pression de travail (8) peut être reliée à une conduite de ventilation (14) raccordée à une sortie de ventilation (18),
dans lequel deux soupapes d'échappement (34, 36 ; 40, 42) montées en parallèle l'une par rapport à l'autre, par l'intermédiaire desquelles la conduite de pression de travail (8) peut être reliée à la conduite de ventilation (14), sont disposées dans le dispositif de commande (32.1, 32.2, 32.3, 32.4), **caractérisé en ce que** les deux soupapes d'admission (48, 50 ; 52, 54) présentent des sections transversales d'ouverture différentes.

2. Dispositif de commande selon la revendication 1, **caractérisé en ce que** les deux soupapes d'échappement (34, 36) sont réalisées sous la forme d'électrovannes de commutation à 2/2 voies, lesquelles sont ouvertes dans l'état non alimenté en courant et fermées dans l'état alimenté en courant.

3. Dispositif de commande selon la revendication 1, **caractérisé en ce que** les deux soupapes d'échappement (40, 42) sont réalisées sous la forme de soupapes de commutation à 2/2 voies commandées par pression de manière pneumatique, lesquelles sont ouvertes lors d'une entrée de commande sans pression et fermées lors d'une entrée de commande sous pression, qu'une soupape pilote (44) commune, laquelle est réalisée sous la forme d'une électrovanne de commutation à 3/2 voies, et par l'intermédiaire de laquelle dans l'état non alimenté en courant les entrées de commande des soupapes d'échappement (40, 42) sont ventilées ainsi que dans l'état alimenté en courant aérées avec la conduite d'aération (12) par l'intermédiaire d'une conduite de liaison (46), est associée aux soupapes d'échappement (40, 42) .

4. Dispositif de commande selon l'une quelconque des revendications 1 à 3, **caractérisé en ce qu'**une soupape de décharge (38), laquelle est fermée lors d'un dépassement d'une pression d'ouverture prédéfinie par la pression de travail s'appliquant dans la conduite de pression de travail (8), et laquelle s'ouvre automatiquement lors d'une atteinte ou d'un passage au-dessous de la pression d'ouverture par la pression de travail, est disposée entre la conduite de pression de travail (8) et la conduite de ventilation (14).

5. Dispositif de commande selon la revendication 4, **caractérisé en ce que** la pression d'ouverture de la soupape de décharge (38) atteint 5 × 10⁴ Pa.

6. Dispositif de commande (32.3, 32.4) selon l'une quelconque des revendications 1 à 5, **caractérisé en ce que** deux soupapes d'admission (48, 50 ; 52, 54) montées en parallèle l'une par rapport à l'autre, par l'intermédiaire desquelles la conduite de pression de travail (8) peut être reliée à la conduite d'aération (12), sont disposées dans celui-ci.

7. Dispositif de commande (32.3) selon la revendication 6, **caractérisé en ce que** les deux soupapes d'admission (48, 50) sont réalisées sous la forme d'électrovannes de commutation à 2/2 voies, lesquelles sont fermées dans l'état non alimenté en courant ainsi qu'ouvertes dans l'état alimenté en courant.

8. Dispositif de commande (32.4) selon la revendication 6, **caractérisé en ce que** les deux soupapes d'admission (52, 54) sont réalisées sous la forme de soupapes de commutation à 2/2 voies commandées par pression de manière pneumatique, lesquelles sont fermées lors d'une entrée de commande sans pression ainsi qu'ouvertes lors d'une entrée de commande sous pression, et qu'une soupape pilote (56) commune, laquelle est réalisée sous la forme d'une électrovanne de commutation à 3/2 voies, et par l'intermédiaire de laquelle les entrées de commande des soupapes d'admission (52, 54) dans l'état non alimenté en courant sont ventilées ainsi que dans l'état alimenté en courant aérées avec la conduite d'aération (12) par l'intermédiaire d'une conduite de liaison (58), est associée aux soupapes d'admission (52, 54).

9. Dispositif de commande selon l'une quelconque des revendications 1 à 8, **caractérisé en ce que** les deux soupapes d'échappement (34, 36 ; 40, 42) et/ou les deux soupapes d'admission (48, 50 ; 52, 54) présentent respectivement au moins au total une section transversale d'ouverture plus grande qu'une soupape d'échappement ou soupape d'admission (6 ; 26 ; 4 ; 20) utilisée jusqu'à présent seule dans un dispositif de commande conventionnel.

10. Dispositif de commande selon l'une quelconque des revendications 1 à 9, **caractérisé en ce que** les deux soupapes d'échappement (34, 36 ; 40, 42) et/ou les deux soupapes d'admission (48, 50 ; 52, 54) sont conçues respectivement avec la même construction.

11. Dispositif de commande selon l'une quelconque des revendications 2 ou 3, **caractérisé en ce qu'**au lieu de soupapes d'échappement (34, 36, 40, 42) réalisées sous la forme de soupapes de commutation à 2/2 voies, des soupapes de commutation à 3/2 voies sont montées, dans lequel respectivement un des deux raccords de passage de celles-ci est fermé.
